Europäisches Patentamt

European Patent Office

Office européen des brevets

(19)

(11) Numéro de publication **0 046 697**
**B1**

# (12) FASCICULE DE BREVET EUROPEEN

(45) Date de publication du fascicule du brevet:
27.03.85

(21) Numéro de dépôt: **81401118.5**

(22) Date de dépôt: **09.07.81**

(51) Int. Cl.⁴: **G 11 B 5/31**

(54) **Transducteur magnétique intégré.**

(30) Priorité: **27.08.80 FR 8018599**

(43) Date de publication de la demande:
**03.03.82 Bulletin 82/9**

(45) Mention de la délivrance du brevet:
**27.03.85 Bulletin 85/13**

(84) Etats contractants désignés:
**DE GB IT**

(56) Documents cités:
**FR - A - 2 063 694
FR - A - 2 150 335
US - A - 3 639 699**

**PATENTS ABSTRACTS OF JAPAN, vol. 4, no. 39, 28 mars
1980, page 123P4 Tokyo, JP
PATENTS ABSTRACTS OF JAPAN, vol. 4, no. 31, 18 mars
1980, page 112P2 Tokyo, JP**

(73) Titulaire: **COMPAGNIE INTERNATIONALE POUR
L'INFORMATIQUE CII - HONEYWELL BULL (dite
CII-HB), 94, avenue Gambetta, F-75020 Paris (FR)**

(72) Inventeur: **Desserre, Jacques, 94 avenue Gambetta,
F-75020-Paris (FR)**
Inventeur: **Helle, Michel, 94, avenue Gambetta,
F-75020 Paris (FR)**

(74) Mandataire: **Gouesmel, Daniel, COMPAGNIE
INTERNATIONALE POUR L'INFORMATIQUE, CII
HONEYWELL BULL 94, avenue Gambetta, F-75020 Paris
(FR)**

BUNDESDRUCKEREI BERLIN

## Description

La présente invention concerne les transducteurs magnétiques intégrés et elle est notamment applicable à la lecture des informations contenues sur les supports magnétiques d'enregistrement, tels que les disques magnétiques, rigides ou souples, et les bandes.

On sait que les disques magnétiques portent leurs informations sur des pistes d'enregistrement concentriques circulaires qui ont une largeur radiale n'excédant pas quelques centièmes de millimètres et couvrent généralement la majeure partie de leurs deux faces.

Les bandes magnétiques portent les informations sur des pistes parallèles à la longueur de la bande.

Dans la pratique courante actuelle, on utilise de plus en plus fréquemment des transducteurs magnétiques intégrés soit pour enregister des informations sur des supports d'enregistrement tels que les disques ou les bandes magnétiques, soit pour les lire, soit enfin pour réaliser l'une ou l'autre de ces deux fonctions. Généralement, on associe à un support d'enregistrement un ou plusieurs transducteurs, le support défilant devant-celui-ci ou ceux-ci. Pour simplifier, on supposera dans la suite de la description qu'un seul transducteur est associé à un même support.

Pour mieux comprendre l'objet de l'invention, il est nécessaire de faire les quelques rappels de magnétisme suivants:

— pour magnétiser (on dit également aimanter), un matériau magnétique à l'intérieur duquel l'induction magnétique est faible, on le soumet d'abord à un champ magnétique dont l'intensité est suffisante pour que le matériau soit saturé, c'est-à-dire que l'induction magnétique dans le matériau atteigne une valeur limite $B_s$. On annule le champ magnétique extérieur. Il subsiste alors dans le matériau une induction magnétique non nulle appelée »induction rémanente« $B_r$ (on dit également aimantation rémanente) caractéristique du matériau. On appelle »perméabilité magnétique initiale du matériau« le rapport $(B/H)$ entre l'induction et le champ magnétique lorsque B et H sont voisins de zéro et ce, sur la courbe de première aimantation. En d'autres termes la perméabilité magnétique initiale du matériau est égale à la pente de la courbe de première aimantation au voisinage du point $B = 0$ et $H = 0$.

— on rappelle d'autre part qu'un matériau magnétiquement anisotrope, présente en général deux directions privilégiées de magnétisation (ou d'aimantation) qui le plus souvent sont perpendiculaires l'une à l'autre. L'une d'elles est appelée »direction de facile aimantation« et l'autre est appelée »direction de difficile aimantation«. La perméabilité initiale du matériau dans la direction de difficile aimantation est très supérieure à la perméabilité initiale du matériau dans la direction de facile aimantation.

Les transducteurs magnétiques intégrés sont par exemple fabriqués par la Compagnie Internationale pour l'Informatique CII-Honeywell Bull et décrits dans les brevets FR-A-2 063 963 déposé le 28 octobre 1969 par la Compagnie Internationale pour l'Informatique et le Commissariat à l'Energie Atomique sous le titre: »Tête magnétique intégrée et procédé de fabrication de ladite tête« et FR-A-2 209 154 déposé le 3 juillet 1972 par la Compagnie Internationale pour l'Informatique sous le tritre: »Transducteur magnétique perfectionné et son procédé de fabrication«.

### Un tel transducteur comprend

a) d'une part, un circuit magnétique formé de deux pièces polaires en couches minces, réunies à une extrémité de manière à ce qu'elles soient couplées magnétiquement et disposées à l'autre extrémité voisine du support d'enregistrement associé au transducteur de façon à former un entrefer. L'une des deux pièces polaires est disposée sur un substrat. On admet que chaque pièce polaire a une forme sensiblement rectangulaire. Sa plus grande dimension est normale au support d'enregistrement.

L'entrefer a une forme voisine de celle d'un rectangle et sa grande dimension Lpm est de l'ordre de la largeur radiale des pistes du support. Son plan est sensiblement perpendiculaire aux pièces polaires et est disposé à une distance très faible de la surface du support d'enregistrement, comprise entre zéro et quelques dixièmes de microns.

b) d'autre part, un bobinage électrique formé de couches minces conductrices superposées dans une direction qui est perpendiculaire au plan des pièces polaires. Ces couches sont séparées les unes des autres par des couches minces électriquement isolantes (on rappelle que l'on désigne habituellement sous le nom de couches minces, des couches dont l'épaisseur est de l'ordre de quelques angströms à quelques microns).

Une partie du bobinage est comprise entre les deux pièces polaires de telle sorte que l'on peut dire que ces dernières forment une enveloppe de cette partie du bobinage.

Le support d'enregistrement magnétique associé au transducteur défile devant celui-ci perpendiculairement au plan des pièces et perpendiculairement à la grande dimension de l'entrefer. On sait que les informations magnétiques d'une piste d'un support d'enregistrement produisent un flux magnétique de fuite au voisinage immédiat de la surface du support. Ce flux qui passe par l'entrefer du transducteur magnétique intégré qui lui associé et traverse le bobinage de celui-ci, engendre un signal utile de lecture S qu'on recueille aux bornes du bobinage. Ce signal est envoyé à des circuits électroniques de lecture associés au transducteur.

On connait également d'autres transducteurs magnétiques intégrés, lesquels ont un bon rapport signal utile/signal bruit S/B. Un tel transducteur est par exemple décrit et revendiqué dans le brevet français FR-A-2 150 335 déposé par le société I.B.M. le 3 Août 1972 avec une date de priorité conventionnelle de 21 Août 1971.

Un tel transducteur a un entrefer dont la grande dimension varie selon la nature et la fonction qu'il accomplit (écriture ou lecture): la grande dimension à la lecture est inférieure à la grande dimension à l'écriture. En d'autres termes, cela veut dire qu'un tel transducteur a son entrefer qui permet d'écrire sur une piste relativement large mais ne permet de lire que sur une piste relativement étroite.

Ce transducteur comporte un conducteur intercalé entre deux éléments magnétisables formant chacun une pièce polaire, ces deux éléments formant une culasse magnétisable (que l'on peut appeler également circuit magnétique). Ces éléments magnétisables définissent un entrefer de transduction adjacent à un bord du conducteur. La culasse magnétique comporte une partie centrale et deux parties marginales entourant ladite partie centrale. La reluctance des parties marginales est plus forte que la reluctance des parties centrales. De ce fait, à la lecture, la participation du signal des parties marginales est atténuée à un point tel que le conducteur ne lit effectivement que sur la partie centrale de l'entrefer.

Malgré la reluctance élevée des parties marginales, on peut faire écrire le transducteur sur toute la largeur de la culasse magnétique (c'est-à-dire sur toute la largeur des pièces polaires) en utilisant un courant d'écriture considérablement supérieur à celui qui est nécessaire pour que seule la partie centrale écrive, ce courant pouvant produire un champ magnétique d'intensité suffisante pour permettre aux parties marginales de saturer le milieu d'enregistrement. De ce fait, il est nécessaire de dépenser une énergie beaucoup plus grande à l'écriture qu'à la lecture, et il risque d'en résulter un échauffement sensible du bobinage, ce qui est un grave inconvénient de ce transducteur.

Un tel transducteur permet de résoudre les problèmes de lecture et d'écriture pour des densités radiales d'enregistrement relativement faibles, c'est-à-dire de l'ordre de 25 pistes par centimètre. (On rappelle que la densité radiale d'enregistrement est le nombre de pistes d'enregistrement par millimètre mesurée suivant un diamètre du disque).

Pour réduire l'énergie électrique fournie au bobinage du transducteur à l'ériture, d'une part, et pour écrire des informations à densité radiale d'enregistrement élevée, ainsi que pour améliorer le rendement des transducteurs magnétiques intégrés à la lecture (on rappelle que le rendement à la lecture est le rapport entre la tension disponible au bord du bobinage et le flux magnétique qui pénètre dans le transducteur au niveau de l'entrefer), on utilise de préférence pour le matériau magnétique constituant les pièces polaires des transducteurs intégrés, un matériau anisotrope dont la direction de facile aimantation est parallèle au support d'enregistrement (et également parallèle à la grande dimension de l'entrefer), et l'axe de difficile aimantation a même direction que la grande dimension des pièces polaires.

De préférence, les transducteurs magnétiques intégrés dont les pièces polaires sont constituées d'un matériau magnétique anisotrope, sont réalisés de la manière décrite dans le brevet FR-A-2 297 475 déposé le 10 janvier 1975 par la Compagnie Internationale pour l'Informatique sous le titre: »Perfectionnement apportés aux structures de têtes magnétiques du type dit intégré«. Un transducteur magnétique intégré tel que décrit dans ce dernier brevet comporte des pièces polaires qui présentent un rétrécissement au niveau de l'entrefer. La longueur du rétrécissement mesurée dans le plan de l'entrefer est égale à la grande dimension de ce dernier soit Lpm. On la désigne également sous le nom de »largeur de piste géométrique«.

Pour réaliser le rétrécissement, les pièces polaires sont usinées par attaque ionique, sur une profondeur d'attaque normale au plan de l'entrefer, et égale à Prof (Prof qui est de l'ordre de quelques microns est mesuré dans le sens de la grande dimension des pièces polaires).

On montre que de tels transducteurs magnétiques intégrés ont un rendement à la lecture relativement élevé.

Afin de mieux comprendre l'objet de l'invention, il est nécessaire de donner la définition suivante:

— on sait qu'une pièce polaire est constituée d'une seule ou de plusieurs couches de matériaux magnétiques.

Dans l'un comme l'autre des deux cas, la pièce polaire est définie comme »pièce polaire monocouche« si la direction de l'aimantation ne peut changer, de façon discontinue, qu'au travers d'une paroi magnétique et non au travers d'une couche déposée ou formée par oxydation ou tout autre procédé. On appelle paroi magnétique le lieu géométrique des points de la pièce polaire monocouche où de produit le changement de direction (le phénomène étant considéré à l'échelle macroscopique).

On voit ainsi qu'on considère la définition de la »pièce polaire monocouche« sous son aspect magnétique et non géométrique et/ou cristallin.

Compte tenu des dimensions de chaque pièce polaire, on peut observer qu'il s'y crée, en raison de tous les facteurs responsables de son anisotropie, une pluralité de petits domaines magnétiques parmi lesquels il en existe où l'aimantation est anti-parallèle, ce qui signifie que pour deux domaines magnétiques adjacents l'aimantation est de sens contraire. La direction de l'aimantation dans chacun des domaines magnétiques est parallèle à la direction de facile aimantation, c'est-à-dire parallèle au support d'enregistrement et perpendiculaire au sens de défilement de celui-ci. Ce phénomène d'apparition des domaines magnétiques dans des pièces polaires monocouches anisotropes, de faibles dimensions, a été mis en évidence par M. Jean-pierre LAZZARI dans sa thèse de doctorat soutenue à Grenoble le 18 décembre 1970 sous le titre: »Etudes et réalisations d'une nouvelle tête d'enregistrement: tête magnétique intégrée en couches minces« et décrit également dans la publication suivante:

— Hempstead R. D, THOMPSON D. A, IEEE, Transaction on Magnetics, VOL. MAG 14, N° 5 septembre 78, dont le titre est: »Unidirectionnal anisotropy in Nickel-Iron films by exchange coupling with antiferomagnetic films«.

Le lieu géométrique des points séparant deux domaines magnétiques adjacents où l'aimantation change de sens et de direction est appelé paroi magnétique par analogie avec la définition donnée plus haut de la pièce polaire monocouche.

On montre également, qu'en dehors des domaines magnétiques adjacents à aimantation anti-parallèle, il existe également des domaines dits de fermeture situés sur les bords de chaque pièce polaire. Il se forme en effet, entre deux domaines magnétiques adjacents à aimantation anti-parallèle, sur les bords des pièces polaires, de petits domaines magnétiques dits de fermeture où l'aimantation a une orientation différente de celle de l'aimantation dans ces deux domaines magnétiques à aimantation anti-parallèle.

Lorsque le transducteur magnétique intégré lit les informations, l'existence de domaines magnétiques à aimantation anti-parallèle et de domaines magnétiques de fermeture provoque l'existence d'un signal de bruit dit »de Barkhausen« qui se superpose au signal de sortie utile S du transducteur. Ceci est dû au phénomène suivant: sous l'effet du champ magnétique de fuite des informations du support, les parois magnétiques séparant deux domaines se déplacent. Il y a par suite création d'une force électromotrice d'induction de bruit, appelée encore »force d'induction parasite« due à la modification de la distribution de l'aimantation dans les pièces polaires, causée par le déplacement des parois magnétiques. On montre que ce signal de bruit de Barkhausen est d'autant plus important que le rapport Prof/Lpm est grand (c'est-à-dire que Lpm est d'une part petit, et d'autre part petit devant Prof): en effet on montre que dans ce cas le nombre de domaines est plus grand. Or, le signal de bruit de Barkhausen est fonction du nombre de domaines. Le signal de bruit de Barkhausen est donc important lorsque par exemple, on cherche à lire les informations d'un disque magnétique dont la densité radiale d'enregistrement est élevée car la largeur radiale a une valeur faible, la grandeur Lpm est également très faible et par suite le rapport Prof/Lpm est grand.

On voit donc que, pour un transducteur magnétique intégré dont la valeur de Lpm est faible devant Prof (et devant la grande dimension des pièces polaires), il y a:

— d'une part un accroissement du signal de bruit dû notamment à l'accroissement du signal de bruit de Barkhausen, signal qu'on peut appeler B;
— d'autre part une diminution du signal utile S puisque en première approximation, celui-ci est proportionnel à Lpm.

Par suite le rapport signal/bruit S/B diminue.

La présente invention permet de remédier à cet inconvénient en améliorant le rapport signal/bruit S/B notamment par la suppression des domaines magnétiques ou par la diminution de leur nombre, ce qui entraîne la réduction du bruit de Barkhausen.

Ceci est obtenu en donnant à chacune des pièces polaires des transducteurs un double rétrécissement, le premier rétrécissement ayant une profondeur Prof et une largeur Lpd, le second rétrécissement ayant une profondeur Profi inférieure à Prof, et une largeur Lpm très inférieure à Lpd. Cette structure définit ainsi une partie centrale entourée de deux parties latérales, l'entrefer d'écriture-lecture étant défini au niveau des parties centrales et ayant la même dimension Lpm à la lecture et à l'écriture.

Le couplage magnétique des pièces polaires entre leurs parties centrales, au niveau de l'entrefer de lecture-écriture, est inférieur au couplage magnétique des parties latérales de chaque pièce polaire avec les parties latérales correspondantes de l'autre pièce polaire. De plus, l'épaisseur des parties centrales de chaque pièce polaire est supérieure à l'épaisseur des parties latérales de chaque pièce polaire.

On montre ainsi qu'un couplage magnétique important entre les parties latérales correspondantes des pièces plaires permet de réduire sensiblement voire même de supprimer les domaines magnétiques non seulement dans les parties latérales mais aussi dans les parties centrales.

Selon l'invention le transducteur magnétique intégré de lecture des informations magnétiques d'un support qui défilent devant lui comprenant:

— un circuit magnétique formé de deux pièces polaires en couches minces anisotropes dont l'axe de difficile aimantation est normal au support, et qui sont séparées par un entrefer parallèle au support, dont la grande dimension est perpendiculaire au sens de défilement des informations, et qui présentent au niveau de l'entrefer un premier rétrécissement de profondeur Prof,
— des moyens couplés magnétiquement à ce circuit, de transformation du flux magnétique de fuite des informations en un signal électrique

est caractérisé en ce que, dans le but de réduire la probabilité d'existence de domaines magnétiques dans les pièces polaires au niveau de l'entrefer de lecture, chacune de celles-ci comporte au niveau de ce dernier, un second rétrécissement de profondeur Profi inférieure à Prof et de largeur Lpm inférieure à la largeur Lpd du premier rétrécissement de manière à ce que les pièces polaires comprennent une partie centrale d'épaisseur $e_2$ et de largeur Lpm comportant l'entrefer de lecture et deux parties latérales de largeur Lpd, d'épaisseur $e_1$ inférieure à $e_2$, le couplage magnétique de ces dernières étant supérieur à celui des parties centrales, de telle sorte que les parties centrales canalisent le flux magnétique des informations à lire afin que celui-ci soit capté par le bobinage du transducteur, la largeur lpm étant suffisamment inférieure à lpd pour supprimer les effets magnétiques de bord sur les bords latéraux des parties centrales.

D'autres caractéristiques et avantages de la présente invention apparaîtront dans la description suivante donnée à titre d'exemple non limitatif et en se référant aux figures annexées.

Sur ces dessins:

La figure 1 est une de trois-quarts en perspective rappelant comment est constitué un transducteur magnétique intégré de lecture d'informations contenues sur un support magnétique, selon l'art antérieur, tel que décrit dans le brevet FR-A-2 063 693.

La figure 2 montre une forme de réalisation préférée d'un transducteur magnétique intégré selon l'art antérieur tel que décrit dans le brevet FR-A-2 297 475 précité, les pièces polaires de ce transducteur comportant un rétrécissement RET au niveau de l'entrefer,

La figure 2a étant une vue de trois-quarts en perspective montrant l'ensemble du transducteur,

La figure 2b étant une vue de trois-quarts en perspective de la partie d'une pièce polaire située au niveau de l'entrefer.

La figure 3 montre comment se constituent les domaines magnétiques dans une »pièce polaire monocouche« réalisée en un matériau magnétique anisotrope,

La figure 3a montrant comment se constituent les domaines magnétiques adjacents,

La figure 3b montrant comment se déplacent les parois magnétiques disposées entre les domaines,

La figure 3c montrant comment se constituent les domaines magnétiques de fermeture.

La figure 4 représente un mode de réalisation préféré d'un transducteur magnétique intégré selon l'invention,

La figure 4a étant une vue de trois-quarts en perspective montrant une partie des pièces polaires vue au niveau de l'entrefer,

La figure 4b étant une vue de trois-quarts en perspective montrant une seule pièce polaire vue également au niveau de l'entrefer.

La figure 5 est une vue de trois-quarts en perspective montrant un transducteur magnétique intégré selon l'invention disposé sur son substrat.

La figure 6 est une vue très schématique montrant comment est disposé un transducteur magnétique intégré selon l'invention par rapport à une piste d'enregistrement d'un support d'information.

La figure 7 est constituée des figures 7a et 7b qui sont des vues de dessous des pièces polaires montrant respectivement où se localisent les effets géométriques dus à la forme des bords (encore appelés effets de bord) lorsque d'une part la dimension Lpd est supérieure à la dimension Lpm et lorsque d'autre part Lpd est très supérieure à Lpm.

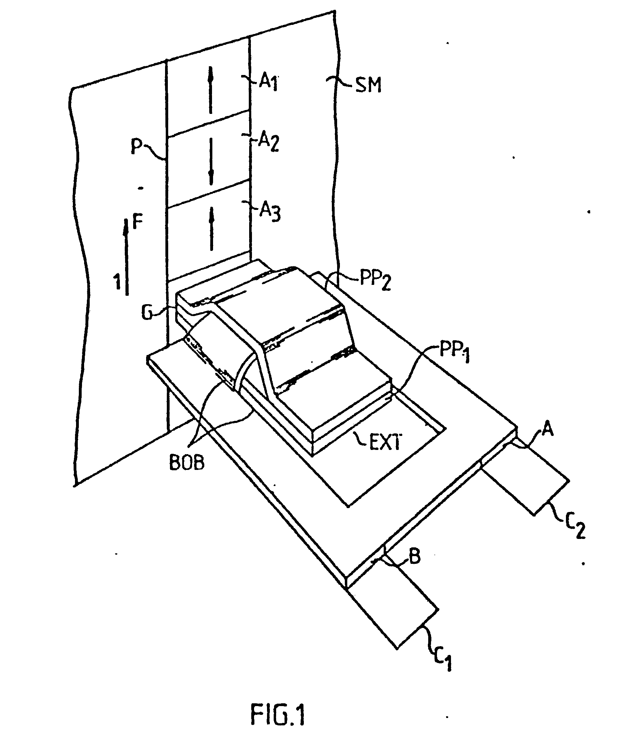

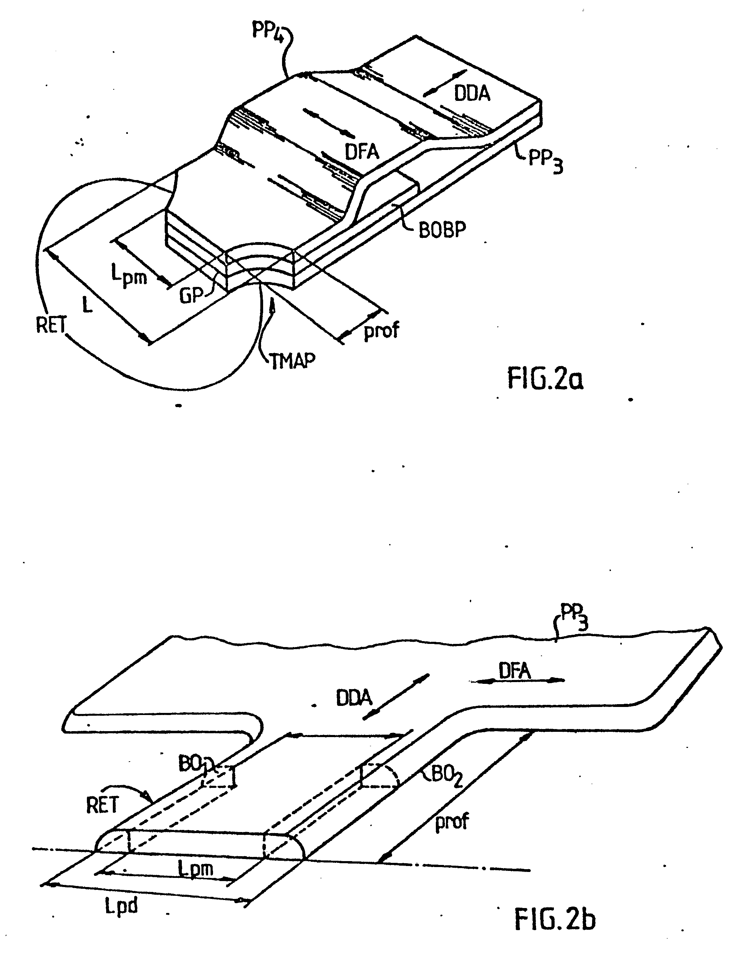

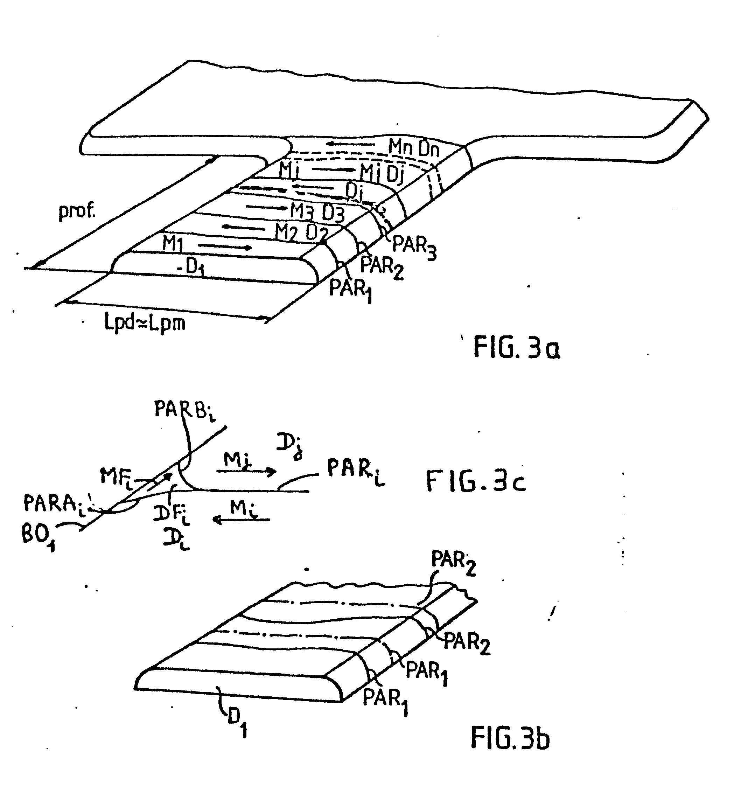

Afin de mieux comprendre comment est constitué le transducteur magnétique intégré selon l'invention, il est utile de faire quelques rappels, d'une part sur les transducteurs magnétiques intégrés selon l'art antérieur, illustrés par les figures 1, 2a, 2b, et d'autre part sur la façon dont sont constitués les domaines magnétiques dans les pièces polaires magnétiques anisotropes, illustrées par les figures 3a, 3b, 3c.

On rappelle que de tels transducteurs magnétiques intégrés ont déjà été décrits dans les trois brevets précités FR-A-2 063 693, FR-A-2 209 154 et FR-A-2 297 475.

Ainsi qu'on peut le voir à la figure 1a, un transducteur magnétique intégré selon l'art antérieur TMA comprend un circuit magnétique formé de deux pièces polaires magnétiques en couches minces $PP_1$ et $PP_2$ entièrement superposées et couplées magnétiquement à un bobinage BOB. Ces pièces polaires sont couplées magnétostatiquement entre elles à une première extrémité EXT et forment l'entrefer G à une autre extrémité. La pièce polaire $PP_1$ est déposée sur un substrat par exemple en matière isolante non représenté pour simplifier la figure 1.

A la figure 1, le transducteur TMA est représenté disposé en regard d'un support d'enregistrement SM dont on n'a représenté qu'une partie pour simplifier. Ce support comporte une pluralité de pistes d'enregistrement dont on ne montre que la piste P laquelle comprend une pluralité d'informations magnétiques élémentaires dont seules trois sont représentées à savoir les informations $A_1$, $A_2$ et $A_3$ sur la figure 1. Le support SM qui est montré défilant dans le sens de la flèche F est par exemple un disque magnétique appartenant à une mémoire à disques.

Le bobinage BOB est formé d'une succession de couches minces conductrices et isolantes empilées selon une direction perpendiculaire au plan des pièces polaires magnétiques $PP_1$ et $PP_2$, une partie des couches minces conductrices et isolantes affleurant dans l'entrefer G. Cette succession de couches minces et isolantes n'est pas représentée à la figure 1 pour simplifier.

Le bobinage BOB comporte, par exemple, deux conducteurs de sortie (et éventuellement

un troisième), à savoir les conducteurs $C_1$ et $C_2$ qui sont connectés d'une part aux extrémités A et B du bobinage et d'autre part au circuit électronique de lecture de la mémoire à disque contenant le disque SM (lorsqu'il y a un troisième conducteurs de sortie, celui-ci est connecté au point milieu du bobinage).

Dans la pratique courante, on réalise de préférence, les transducteurs magnétiques intégrés de la manière représentée aux figure 2a et 2b (voir brevet FR-A-2 297 475).

Ainsi qu'on peut le voir sur ces mêmes figures qui représentent d'une part un tel transducteur TMAP (figure 2a) et d'autre part une partie d'une de ses pièces polaires vue au niveau du rétrécissement RET, les pièces polaire $PP_3$ et $PP_4$ de ce dernier sont réalisées en un matériau magnétique anisotrope dont l'axe de difficile aimantation est orienté suivant la direction DDA perpendiculaire au support magnétique SM, cette direction restant tangente à la surface des pièces polaires. L'axe de facile aimantation de ces dernières est orienté selon la direction DFA perpenduculaire à la direction de difficile aimantation DDA et parallèle au support d'enregistrement SM.

Le transducteur TMAP comprend au niveau de son entrefer GP, un rétrécissement RET de profondeur d'attaque Prof, qui est généralement de l'ordre de quelques microns. Ce rétrécissement est tel que la grande dimension de l'entrefer GP, à savoir Lpm, est sensiblement inférieure à la largeur L des pièces polaires en dehors de ce rétrécissement, c'est-à-dire la largeur maximum de celles-ci. Dans la pratique courante, le rapport L/Lpm est inférieur ou égal à 2.

On montre, dans le brevet 2 297 475 précité qu'un tel transducteur TMAP permet d'enregistrer sur le support SM des pistes d'enregistrement dont la largeur radiale est définie avec une grande précision et est voisine de Lpm.

La figure 2b montre, avant et après usinage la forme d'une des deux pièces polaires, par exemple la pièce polaire $PP_3$, vue au niveau du rétrécissement. Avant usinage la pièce $PP_3$ a, au niveau du rétrécissement, une largeur Lpd dite largeur déposée. On usine ensuite les bords $BO_1$ et $BO_2$ du rétrécissement RET de manière à la réduire légèrement et on obtient ainsi une pièce polaire dont la largeur est Lpm (avec Lpm peu différent de Lpd).

On montre que, pour des pièces polaires telles que $PP_3$ ou $PP_4$ réalisées en matériau magnétique anisotrope d'épaisseur e inférieure ou égale à dix microns, on peut observer au niveau du rétrécissement RET une série de domaines magnétiques $D_1$, $D_2$, $D_3$, ... $D_i$, $D_j$, ... $D_n$ dans lesquels l'aimantation est anti-parallèle, c'est-à-dire que l'aimantation $M_1$ dans le domaine $D_1$ est parallèle et de sens opposé à l'aimantation $M_2$ dans le domaine $D_2$, que l'aimantation dans le domaine $D_2$ est parallèle et de sens opposé à l'aimantation dans le domaine $D_3$, et ainsi de suite. On voit ainsi que l'aimantation dans des domaines d'ordre impair $D_1$, $D_3$, $D_5$, $D_7$, etc. ... est parallèle et de même sens. De même l'aimantation dans les domaines d'ordre pair $D_2$, $D_4$, $D_6$, etc. ... est parallèle et de même sens, ce sens étant opposé à celui de l'aimantation dans les domaines d'ordre impair.

Le domaine magnétique $D_1$ est séparé du domaine magnétique $D_2$ par une paroi magnétique $PAR_1$, le domaine $D_2$ est séparé du domaine $D_3$ par une paroi magnétique $PAR_2$, le domaine magnétique $D_i$ est séparé du domaine magnétique $D_j$ par la paroi magnétique $PAR_j$, etc. Ces phénomènes sont illustrés par la figure 3a.

Si l'on considère la figure 3c qui montre une partie des domaines magnétiques $D_i$ et $D_j$, on peut observer sur le bord $BO_1$ du rétrécissement RET, entre les domaines $D_i$ et $D_j$, un domaine magnétique dit de fermeture $DF_i$ où l'induction magnétique $MF_i$ a une orientation différente des inductions magnétiques $M_i$ et $M_j$ dans les domaines $D_i$ et $D_j$. L'induction $MF_i$ peut être par exemple sensiblement perpendiculaire aux inductions $M_i$ et $M_j$, ainsi qu'il est représenté à la figure 3c. On observe que la paroi magnétique $PAR_j$ qui sépare les domaines $D_i$ et $D_j$ se devise en deux parois $PARA_i$ et $PARB_i$ sur le $BO_1$ du rétrécissement RET. Il est clair, de même, que sur le bord $BO_2$ (non représenté à la figure 3c) du rétrécissement RET on pourrait observer un domaine de fermeture $DF'_1$ où l'induction $MF'_i$ est parallèle et de sens opposé à l'induction $MF_i$ dans le domaine $DF_i$.

Lors des opérations de lecture du transducteur TMAP, le champ de fuite $H_f$ produit par les informations magnétiques $A_1$, $A_2$, $A_3$, ... etc de la piste magnétique P du support SM traverse les différents domaines magnétiques $D_1$, $D_2$, $D_i$, ... etc. Du fait de l'anisotropie des pièces polaires $PP_3$ et $PP_4$, la perméabilité magnétique dans le sens de la direction de difficile aimantation étant très supérieure à la perméabilité magnétique dans le sens de la direction de facile aimantation, les lignes du flux du champ magnétique de fuite sont quasiment perpendiculaires aux parois des domaines. Les phénomènes suivants se produisent alors (figure 3b):

— au niveau des domaines magnétiques $D_1$, $D_2$, ... $D_i$, $D_j$ ... $D_n$: on constate que leurs parois se déplacent de façon discontinue sous l'action du champ magnétique de fuite $H_f$. Il en résulte la production d'une force électromotrice d'induction parasite qui contribue ainsi qu'il a été dit plus haut au signal de bruit B

— au niveau des domaines magnétiques de fermeture $DF_i$, $DF'_i$, $DF_j$, $DF'_j$ etc ...: ceux-ci se déplacent également de manière discontinue dans une direction parallèle au champ magnétique de fuite $H_f$, ce qui produit également une force électromotrice d'induction parasite qui s'ajoute à la force d'induction de bruit due aux domaines $D_i$, $D_j$, ... etc.

On rappelle que la somme des forces électromotrices d'induction parasite due aux domaines magnétiques $D_i$, $D_j$ et aux domaines magnétiques

de fermeture $DF_i$, $DF'_i$, $DF_j$, $DF'_j$, etc ... constitue le signal de bruit de Barkhausen.

On sait que, plus la dimension Lpd est petite et que le rapport Prof/Lpd (ou Prof/Lpm) est grand plus les signaux de bruit de Barkhausen sont importants parce que la probabilité d'existence de domaines magnétiques $D_i$, $D_j$ etc ... et de domaines magnétiques de fermeture $DF_i$, $DF'_i$, etc ... est élevée.

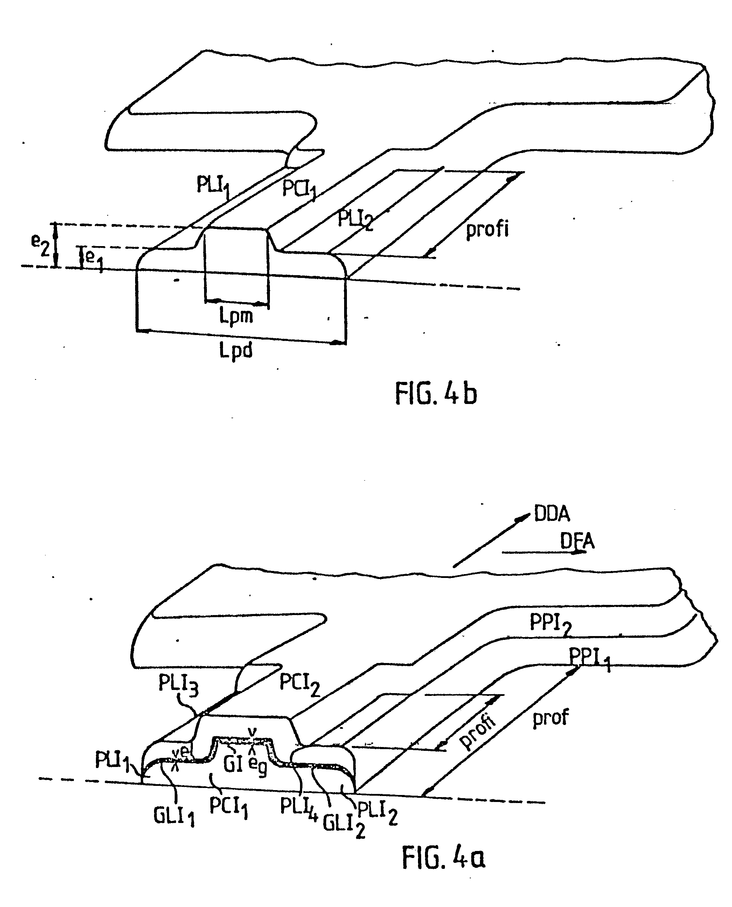

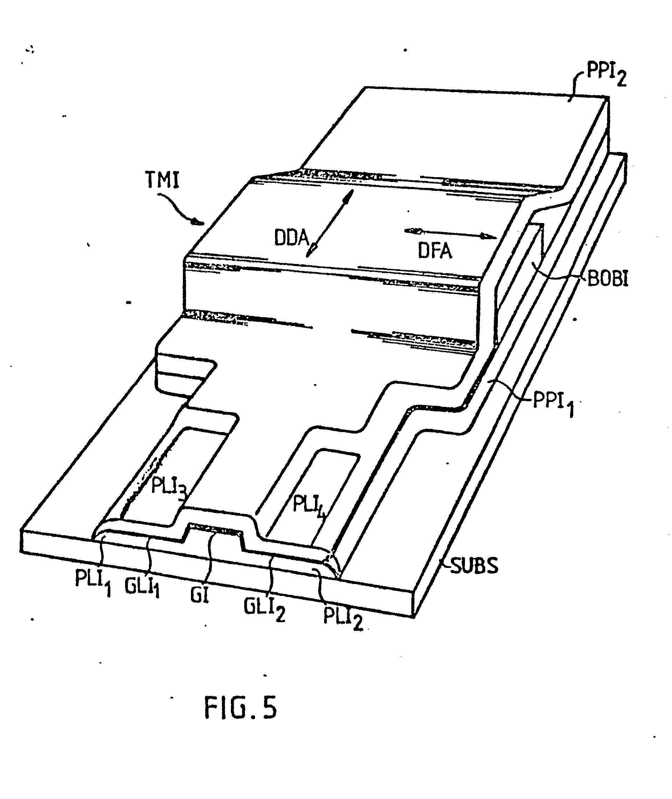

Le transducteur magnétique intégré TMI selon l'invention représenté aux figures 4a, 4b et 5 permet de remédier à ces inconvénients en diminuant le nombre de domaines magnétiques adjacents à aimantation anti-parallèle et le nombre de domaines de fermeture, et de ce fait en réduisant le signal de bruit de Barkhausen (voire en le supprimant).

Ainsi qu'on peut le voir aux figures 4a, 4b et 5 le transducteur magnétique intégré selon l'invention TMI comprend:

— un bobinage BOBI,
— une première pièce polaire $PPI_1$ et une seconde pièce $PPI_2$ de largeur totale Lpd. La Pièce polaire $PPI_1$ est disposée sur le substrat SUBS.

Chacune de ces pièces polaires comprend au niveau de l'entrefer, c'est-à-dire en sa partie la plus proche du support SM une partie centrale et deux parties latérales.

La pièce polaire $PPI_1$ comprend une partie centrale $PCI_1$ d'épaisseur $e_2$ (voir figure 4b), de largeur Lpm voisine de la largeur radiale des pistes du support magnétique d'enregistrement SM, et deux parties latérales $PLI_1$ et $PLI_2$ d'épaisseur $e_1$ inférieure à $e_2$, de profondeur Profi, inférieure à Prof (ainsi qu'on peut le voir aux figures 4a, 4b et 5).

La pièce polaire $PPI_2$ comprend une partie centrale $PCI_2$ d'épaisseur $e_2$ de largeur Lpm et de profondeur Profi, et deux parties latérales $PLI_3$ et $PLI_4$ d'épaisseur $e_1$ inférieure à $e_2$ et de profondeur Profi.

Les deux parties centrales $PCI_1$ et $PCI_2$ sont séparées par un matériau non magnétique et d'épaisseur $e_g$ de manière à former l'entrefer GI du transducteur, alors que les parties latérales $PLI_1$—$PLI_3$ d'une part, $PLI_2$—$PLI_4$ d'autre part, sont séparées par un matériau non magnétique d'épaisseur $e_1$ très inférieure à $e_g$. De préférence, le matériau non magnétique qui sépare les parties latérales et les parties centrales est le même et réalisé en une seule et même couche dont l'épaisseur varie suivant que l'on est au niveau des parties centrales ou au niveau des parties latérales. On peut dire également que les parties latérales $PLI_1$—$PLI_3$, $PLI_2$—$PLI_4$ sont respectivement séparées par des entrefers latéraux $GLI_1$ et $GLI_2$.

Généralement la largeur Lpd totale des pièces polaires est très supérieure à Lpm.

Au vu de ce qui précède, il apparaît clairement que le couplage magnétique des parties centrales $PCI_1$ et $PCI_2$ des Pièces polaires $PPI_1$ et $PPI_2$ est sensiblement inférieur au couplage magnétique des parties latérales $PLI_1$—$PLI_3$, et $PLI_2$—$PLI_4$ et ce du fait que l'épaisseur du matériau non magnétique entre les parties centrales est très supérieure à l'épaisseur du matériau magnétique entre les parties latérales. A la limite, l'épaisseur e du matériau entre les parties latérales (qui est évidemment la même pour les parties latérales $PLI_1$ et $PLI_3$ d'une part et $PLI_2$ et $PLI_4$ d'autre part), peut être extrêmement faible. Dans ce cas, le couplage magnétique entre les parties latérales est évidemment maximum.

Il est clair que la partie supérieure des pièces polaires qui ne se situe pas au niveau de l'entrefer ne comporte ni partie centrale ni partie latérale et a une épaisseur constante égale à l'épaisseur $e_2$ (qui est l'épaisseur des parties centrales $PCI_1$ et $PCI_2$ de ces pièces au niveau de l'entrefer).

La disposition des pièces polaires $PPI_1$ et $PPI_2$ du transducteur TMI selon l'invention, qui vient d'être décrite, permet de diminuer sensiblement le nombre de domaines magnétiques au niveau des parties centrales $PCI_1$ et $PCI_2$ pour les raisons suivantes:

— en ce qui concerne le nombre de deomaines magnétiques, chacune des pièces polaires au niveau de l'entrefer, sur une profondeur Profi, se comporte comme si elle avait une largeur Lpd. Or on a vu que plus le rapport Prof/Lpd est petit, plus la probabilité pour que le nombre de domaines soit réduit est grande, ce qui est le cas ici.
— le couplage magnétique important entre les parties latérales des pièces polaires permet également de diminuer le nombre de domaines et de réduire les champs démagnétisants à l'intérieur de chaque pièce polaire, ainsi qu'il a d'ailleurs été décrit dans le brevet français 2 063 694 déposé le 28 octobre 1969 par la Compagnie Internationale pour l'Informatique et le Commissariat à l'Energie Atomique, sous le titre »Circuit magnétique à faible reluctance«.

En d'autres termes, l'effet de la diminution des champs démagnétisants, et donc du nombre de domaines magnétiques dans les pièces polaires, qui se produit au niveau de leurs parties latérales, a pratiquement les mêmes effets au niveau de leurs parties centrales.

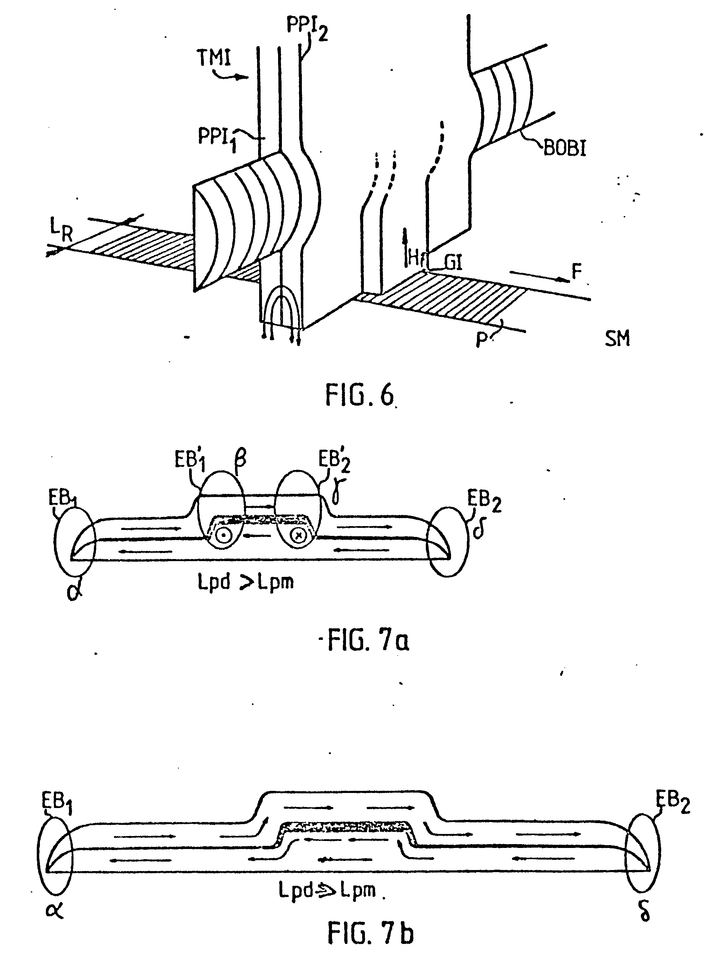

On montre également, ainsi qu'on peut le voir respectivement aux figures 7a et 7b, que la disposition adoptée pour les pièces polaires du transducteur magnétique intégré TMI selon l'invention permet de diminuer les effets magnétiques parasites qui se produisent sur les bords des pièces polaires et qui perturbent la lecture des informations contenues sur le support SM: ces effets magnétiques parasites sont plus connus sous le nom d'»effets de bord«. Cette diminution des effets de bord est d'autant plus sensible que Lpm est très inférieur à Lpd. On sait en effet, d'apres FR-A-2 063 963 precitzé, que les effets de bords, dans une couche muse, sont d'antant moins importants que la largeur est grande devant l'épaisseur; d'antre part plus Lpd est grand, moris les effets de bords sont importants: on voit en effet sur la figure 7b que les effets de bord n'existent seulement qu'au niveau des extrémités des parties latérales des pièces polaires soit $\alpha$ et $\beta$, ces effets de bord étant dénommés $EB_1$ et $EB_2$ et étant symbolisés par des ellipses. On voit au contraire à la figure 7a, que si Lpm est seulement inférieur à Lpd mais dans des proportions moindres qu'à la figure 7b, il subsiste des effets de bord $EB'_1$ et $EB'_2$ sur les bords $\beta$ et $\gamma$ de la partie centrale des pièces polaires.

La disposition adoptée pour les pièces polaires du transducteur TMI selon l'invention a également un autre avantage illustré par la figure 6. Cette figure montre de façon très schématique la disposition relative du transducteur magnétique intègre TMI par rapport à une piste P du support SM: la partie centrale des pièces polaires et par suite l'entrefer GI est parfaitement centrée sur la piste P, c'est-à-dire que l'axe symétrie de l'entrefer GI qui est parallèle au sens de défilement de la piste P symbolisé par la flèche F et est perpendiculaire aux pièces polaires est confondu avec l'axe de symétrie de la piste P. (on rappelle que la grande dimension de l'entrefer GI, à savoir Lpm, est sensiblement égale à la largeur radiale $L_R$ de la piste P.)

Du fait du couplage magnétique extrêmement important entre les parties latérales des pièces polaires $PPl_1$ et $PPl_2$, les champs magnétiques de fuite des informations des pistes adjacentes de la piste P qui sont court-circuitées par celles-ci ainsi qu'on peut le voir à la figure 6, ne pénètrent pas dans le bobinage BOBI du transducteur TMI, et de ce fait ne donnent lieu à aucun signal parasite. Au contraire la partie centrale $PCl_1$ et la partie centrale $PCl_2$ canalisent parfaitement le champ magnétique de fuite $H_f$ des informations magnétiques de la piste P de telle façon que celui-ci soit capté par le bobinage BOBI.

Il est clair que la structure proposée pour le transducteur magnétique TMI selon l'invention est également applicable à un transducteur dont les pièces polaires ne sont plus monocouches mais au contraire multicouches.

Il est clair également que l'invention s'applique à tout transducteur magnétique intégré qui possède des moyens couplés magnétiquement aux circuits magnétiques formés par les pièces polaires, de transformation du flux magnétique de fuite des informations du support SM en un signal électrique, moyens autres qu'un bobinage. Ces moyens peuvent être par exemple constitués par une ou plusieurs magnétorésistances disposées entre les pièces polaires. On trouvera une description de ces transducteurs à magnétorésistances par exemple dans le brevet FR-A-2 165 206 déposé le 22 décembre 1971 par la Compagnie Internationale pour l'Informatique sous le titre: »magnétorésistance perfectionnée et transducteurs électromagnétiques les incorporant«.

## Revendications

1. Transducteur magnétique intrégré de lecture des informations magnétiques d'un support qui défile devant lui comprenant:

— un circuit magnétique formé de deux pièces polaires en couches minces ($PPl_1$, $PPl_2$) anisotropes dont l'axe de difficile aimantation est normal au support (SM), qui sont séparées par un entrefer (GI) parallèle au support (SM), dont la grande dimension est perpendiculaire au sens de défilement des informations et qui présentent au niveau de l'entrefer un premier rétrécissement de profondeur Prof,
— des moyens (BOBI) couplés magnétiquement à ce circuit de transformation du flux magnétique de fuite des informations en un signal électrique,

caractérisé en ce que dans le but de réduire la probabilité d'existence de domaines magnétiques dans les pièces polaires ($PPl_1$, $PPl_2$), au niveau de l'entrefer de lecture (GI), chacune de celles-ci comporte au niveau de ce dernier, un second rétrécissement de profondeur Profi inférieure à Prof et de largeur Lpm inférieure à la largeur Lpd du premier rétrécissement de manière à ce que les pièces polaires comprennent une partie centrale ($PCl_1$, $PCl_2$) d'épaisseur $e_2$, de largeur Lpm comportant l'entrefer de lecture (GI) et deux parties latérales ($PLl_1-PLl_3$, $PLl_2-PLl_4$) de largeur Lpd, d'épaisseur $e_1$ inférieure à $e_2$, le couplage magnétique entre les parties latérales des pièces polaires situées d'un même côté de l'entrefer étant supérieur au couplage magnétique des parties centrales, de telle sorte que les parties centrales canalisent le flux magnétique des informations à lire que celui soit capté par lesdits moyens (BOBI), la largeur Lpm étant suffisamment inférieure à Lpd pour supprimer les effets magnétiques de bord sur les bords latéraux des parties centrales ($PCl_1$, $PCl_2$).

2. Transducteur selon la revendication 1 caractérisé en ce que les pièces polaires ($PPl_1$, $PPl_2$) sont monocouches.

## Patentansprüche

1. Integrierte Magnetwandler zum Auslesen von magnetischen Informationen von einem Träger, der vor ihm vorbeiläuft, enthaltend:

— einen Magnetkreis, der aus zwei Polteilen ($PPl_1$, $PPl_2$) aus anisotropen Dünnschichten gebildet ist, deren Achse schwerer Magnetisierung senkrecht zu dem Träger (SM) ist und die durch einen zum Träger (SM) parallelen Eisenspalt (GI) getrennt sind, dessen große Abmessung senkrecht zur Vorbeilaufrichtung der Informationen ist, und die auf der Höhe des Eisenspaltes eine erste Verengung der Tiefe Prof aufweisen,

— magnetisch mit diesem Kreis gekoppelte Mittel (BOBI) zur Umwandlung des Streumagnetflusses der Informationen in ein elektrisches Signal,

dadurch gekennzeichnet, daß zur Verminderung der Wahrscheinlichkeit, daß magnetische Gebiete in den Polteilen ($PPI_1$, $PPI_2$) auf der Höhe des Auslese-Eisenspaltes (GI) vorhanden sind, jedes derselben auf der Höhe des letzteren eine zweite Verengung der Tiefe Profi aufweist, die kleiner als Prof ist, und eine Breite Lpm besitzt, die kleiner als die Breite Lpd der ersten Verengung ist, so daß die Polteile einen zentralen Teil ($PCI_1$, $PCI_2$) der Dicke $e_2$, der Breite Lpm umfassen, der den Auslese-Eisenspalt (GI) enthält, und zwei seitliche Teile ($PLI_1 - PLI_3$, $PLI_2 - PLI_4$) der Breite Lpd und der Dicke $e_1$ kleiner als $e_2$ umfassen, wobei die magnetische Kopplung zwischen den seitlichen Teilen dieser Polteile, die auf derselben Seite des Eisenspaltes liegen, stärker als die magnetische Kopplung der zentralen Teile ist, so daß die zentralen Teile den Magnetfluß der auszulesenden Informationen kanalisieren, damit er durch die genannten Mittel (BOBI) erfaßt wird, wobei die Breite Lpm ausreichend kleiner als Lpd ist, um die magnetischen Randeffekte an den Seitenrändern der zentralen Teile ($PCI_1$, $PCI_2$) zu unterdrücken.

2. Wandler nach Anspruch 1, dadurch gekennzeichnet, daß die Polteile ($PPI_1$, $PPI_2$) Einzelschichten sind.

## Claims

1. An integrated magnetic transducer for reading magnetic data of a carrier which travels in front of the same, comprising:

— a magnetic circuit formed by two anisotropic thinlayer pole pieces ($PPI_1$, $PPI_2$) of which the axis of difficult magnetisation is at right angles to the carrier (SM), which are separated by a gap (GI) parallel to the carrier (SM), of which the large dimension is at right angles to the direction of data travel and which have a first restriction of the depth Prof at the level of the gap,

— means (BOBI) coupled magnetically to this circuit for conversion of the magnetic data leakage flux into an electric signal,

characterised in that for the purpose of reducing the probability of the presence of magnetic domains in the pole pieces ($PPI_1$, $PPI_2$) at the level of the reading gap (GI), each of these comprises — at the level of this latter — a second restriction having a depth Profi smaller than Prof and a width Lpm smaller than the width Lpd of the first restriction in a manner such that the pole pieces comprise a central part ($PCI_1$, $PCI_2$) of a thickness $e_2$, of a width Lpm comprising the reading gap (GI) and two lateral parts ($PLI_1 - PLI_3$, $PLI_2 - PLI_4$) of a width Lpd, of a thickness $e_1$ smaller than $e_2$,

the magnetic coupling between the lateral parts of the pole pieces situated at the same side of the gap being greater than the magnetic coupling of the central parts, so that the central parts channel the magnetic flux of the date which are to be read in order that said flux be picked up by the said means (BOBI), the width Lpm being sufficiently smaller than Lpd to suppres the magnetic edge effects on the lateral edges of the central parts ($PCI_1$, $PCI_2$).

2. A transducer according to claim 1, characterised in that the pole pieces ($PPI_1$, $PPI_2$) comprise a single layer.

FIG.1

FIG.2a

FIG.2b

FIG. 3a

FIG. 3c

FIG. 3b

FIG. 4 b

FIG. 4 a

FIG.5

FIG. 6

Lpd > Lpm

FIG. 7a

Lpd ≫ Lpm

FIG. 7b